**Europäisches Patentamt**

**European Patent Office**

**Office européen des brevets**

(19)

(11) Publication number: **0 007 497**
**A1**

(12)

# EUROPEAN PATENT APPLICATION

(21) Application number: **79102312.0**

(22) Date of filing: **07.07.79**

(51) Int. Cl.³: **F 24 D 12/00**
**F 24 F 11/08, G 05 D 23/19**

(30) Priority: **17.07.78 US 925077**

(43) Date of publication of application:
**06.02.80 Bulletin 80/3**

(84) Designated Contracting States:
**DE FR GB IT NL SE**

(71) Applicant: **CARRIER CORPORATION**
**Carrier Parkway**
**Syracuse New York(US)**

(72) Inventor: **Eisberg, Keith V.**
**1095 Observatory Road**
**Martinsville, Indiana(US)**

(74) Representative: **Fisher, Bernard et al,**
**Raworth, Moss & Cook 36 Sydenham Road**
**Croydon Surrey CR0 2EF(GB)**

(54) **Air conditioning system and method for heating and cooling an enclosure.**

(57) An air conditioning system including a furnace (14) and a heat pump (18) selectively operable to provide relatively warm air to an enclosure. An indoor thermostat (46) having first and second threshold temperature settings senses the temperature of the air in the enclosure. A control coordinates the operation of the heat pump (18) and furnace (14) in response to the sensed temperature of the air in the enclosure. The control is operable in a first state to selectively activate the heat pump (18) whenever the first threshold temperature exceeds the sensed temperature and is operable in a second state to solely activate the furnace (14) whenever the second threshold temperature exceeds the sensed temperature. Whenever the furnace (14) is activated, the furnace (14) is maintained active and the heat pump inactive until the sensed temperature exceeds the first threshold temperature.

FIG 2

EP 0 007 497 A1

-1-

## Air Conditioning System and Method for
## Heating and Cooling an Enclosure

The present invention relates to an air conditioning system for providing relatively warm and cool conditioned air to an enclosure, and in particular to a system including a furnace and a heat pump that are coordinately operated to heat the enclosure to maintain desired temperture level therein.

The need to conserve fossil fuels is a self-evident fact of modern life. One of the prime users of fossil fuels is the generation of heat for homes, office buildings and other inhabited places. The heating fuel requirement for such buildings represents a major percentage of all fossil fuel utilization.

One of the most prominent alternatives to coventional furnaces employing fossil fuels is the heat pump. As is well recognized in the art, a heat pump extracts heat from the ambient and transfers such heat to an occupied space via a refrigeration unit operating in a reverse cycle. However, although a heat pump is more efficient than conventional fossil fuels employed in traditional heating systems when ambient temperatures are relatively high, the relative difference in efficiency between the heat pump and conventional systems decreases as the ambient temperature falls. Depending upon the cost of conventional fossil fuels, the "break even" point, that is the ambient temperature at which the use of the heat pump becomes less efficient or more costly than the use of a conventional fossil fuel burning apparatus varies from one geographical region to another. Very often the "break even" point is less than the "balance point", that is the ambient temperature at which the heat pump can just maintain the desired temperature in the occupied spaces.

Thus, to obtain maximum efficiency from a heat pump, operating in a region whereat the balance point is higher than the "break even" point, the heat pump should continue to run, even though the occupied space temperature will continue to decrease when the ambient temperature is less than the balance point but higher than the "break even" point. The heat pump can be deactivated and an auxiliary heat source, such as a natural gas or propane gas furnace, can be activated when the temperature in the space falls below a predetermined level.

Various arrangements have been proposed for coordinating the operation of furnaces and heat pumps in a common heating system to provide optimum efficient use of each of the heating elements. For example, it has been proposed to provide a control system to coordinate the operation of the heat pump and the furnace, with the heat pump being solely operable at a first indoor temperature level and the furnace being solely operable at a second indoor temperature level. Although the described system attempts to provide an extremely efficient system, the system fails to recognize that a heat pump loses efficiency when it is cycled numerous times. The heat pump disclosed in the cited patents cycles on and off to provide first stage heating, with the furnace providing second stage heating. Due to the relatively rapid cycling of the heat pump, the coefficient of performance thereof decreases. Accordingly, it is a primary object of this invention to provide a combination heat pump furnace heating system wherein operation of the furnace and heat pump is coordinately controlled to provide maximum efficient usage.

The object of the present invention is attained in an air conditioning system providing relatively warm or cool conditioned air to an enclosure and including a furnace and a heat pump selectively operable to provide the relatively warm air. An indoor thermostat having first and second threshold temperature settings senses the temperature of the air in the enclosure. Control means coordinates the operation of the heat pump and furnace in response to the sensed temperature of the air in the enclosure. The control means is operable in a first state to solely activate the heat pump whenever the first threshold temperature exceeds the sensed temperature and is operable in a second state to solely activate the furnace whenever the second threshold temperature exceeds the sensed temperature. Whenever the furnace is activated, the furnace is maintained active and the heat pump inactive until the sensed temperature exceeds the first threshold temperature.

This invention will now be described by way of example, with reference to the accompanying drawings in which:

Figure 1 is a schematic illustration of an air conditioning system embodying the present invention; and

Figure 2 is a schematic diagram of a control for use in the preferred embodiment shown in Figure 1.

Referring now to the drawings, there is illustrated a preferred embodiment of the present invention. In referring to the figures of the drawings, like numerals shall refer to like parts.

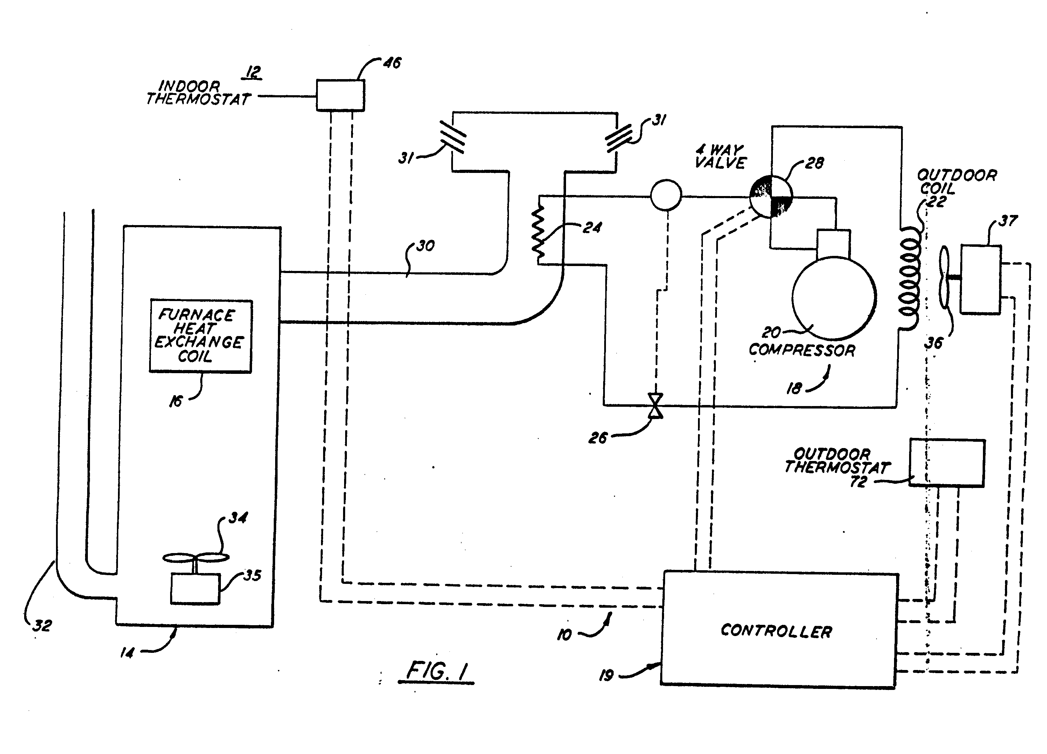

Referring particularly to Figure 1, there is shown an air conditioning system generally designated 10 for conditioning the air in an enclosure 12. This system includes both heating and cooling apparatus to provide relatively warm or relatively cool conditioned air to the enclosure to regulate the temperature therein to a desired level. The system 10 includes a furnace 14 including a heat exchange coil 16. The system further includes a heat pump generally designated 18 and a control mechanism or controller 19 for coordinating the operation of furnace 14 and heat pump 18 when relatively warm conditioned air is required in enclosure 12. Heat pump 18 is a conventional mechanical heat pump and includes a compressor 20, an outdoor coil 22, an indoor coil 24, an expansion device 26 and a four-way reversing valve 28, connected together by suitable conduits to define the heat pump cycle.

Furnace 14 may either be a natural gas, oil or electric furnace and delivers conditioned air to the enclosure through supply duct 30 terminating in discharge grills or outlets 31. Return air from the enclosure is delivered to the furnace via conduit 32. A fan or blower 34, driven by electric motor 35, routes the air delivered to furnace 14 over heat exchange coil 16 and thence through supply duct 30 for delivery to the enclosure.

Indoor heat exchange coil 24 is disposed within supply conduit 30. The indoor coil will deliver heat to the supply air when the furnace is inoperative and the heat pump is energized and functioning in a heating mode.

In the heating mode, outside coil 22 operates as an evaporator absorbing heat from the ambient and the inside coil operates as a condenser dispensing heat to the supply air moved by blower 34. As is well known in the art, operation of the coils 22 and 24 is reversed when the heat pump is functioning as a conventional, mechanical refrigeration unit. A fan 36, driven by electric motor 37, is associated with outdoor coil 22 to route ambient air over the outdoor coil in heat transfer relation with the refrigerant flowing through the coil.

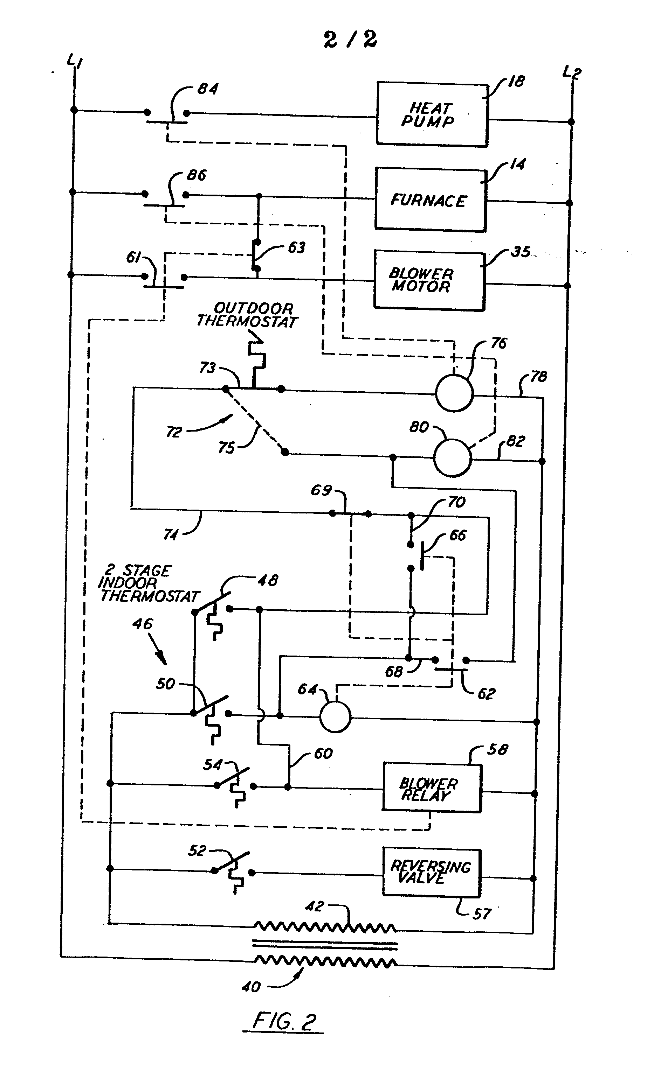

Referring now particularly to Figure 2, there is schematically illustrated details of control mechanism 19 for coordinating the operation of the furnace and heat pump when the indoor temperature falls below a predetermined level such that relatively warm conditioned air is required to maintain the desired temperature level within the enclosure.

As shown, the various components of the control mechanism are connected to a source of electrical power suitably represented by lines L1 and L2. The control includes a step-down transformer 40 which reduces the conventional 240 volt supply delivered through lines L1 and L2 to a suitable lower voltage level, as for example 24 volts. The secondary coil 42 of transformer 40 is connected to an indoor thermostat generally designated 46. Thermostat 46 includes a heating portion having first and second stages, respectively 48 and 50, and a cooling portion having first and second stages, respectively 52 and 54. Connected in series with first stage 52 of the cooling portion of thermostat 46 is a control relay 57 for operating four-way reversing valve 28. Connected in series with second stage 54 of the cooling portion of the thermostat is a relay 58 for activating furnace blower or fan motor 35. Energization of relay 58 results in the closing of switch 61 and the opening of switch 63. Normally closed switch 63 insures energization of blower 34 any time furnace 14 is activated. Additionally, opening of switch 63 permits operation of blower 34 independent from operation of furnace 14. Blower motor 35 will also be energized in response to the closure of first stage 48 of the heating portion of thermostat 48 through electrical conductor 60. A control relay 64 is connected in series with second stage 50 of the heating portion of the thermostat. Control relay 64 when energized closes normally open switches 62 and 66 respectively provided in electrical conductors 68 and 70 and opens normally closed switch 72 provided in electrical conductor 74.

An outdoor thermostat 72 responsive to the temperature of the ambient is provided having first and second operating positions, respectively 73 and 75. The outdoor thermostat in its first operating position 73, as shown in solid line, will cause heat pump relay 76 to be energized through electrical conductor 78. Outdoor thermostat 72, when in its second operating position 75, as represented by the dotted line, will cause furnace relay 80 to be energized through electrical conductor 82. Outdoor thermostat 72 may either be preset to a predetermined temperature at which it will switch from its first to second operating positions, or may be manually adjustable whereby a person can vary the temperature at which the thermostat will switch operating positions. By providing a manually adjustable thermostat, differences in the "break even" point from one geographic area to another can be readily factored into operation of system 10. For example, where electric rates are relatively inexpensive as compared to the cost of fossil fuels, the "break even" temperature setting for thermostat 72 to switch from its first operating position 73 to its second position 75 will be relatively low, as for example, 8°F. On the other hand, where the cost to operate the heat pump (electric rates) is relatively high as compared to the cost to operate the furnace (fossil fuel rates), the switch over temperature for thermostat 72 will be established at a relatively high level, as for example, 40°F. In any event, by providing a manually adjustable thermostat 72, the operator of system 10 can readily establish the "break even" temperature at which thermostat 72 will switch from its first to second operating positions providing the most economical operation of the system. The energization of heat pump relay 76 will close switch 84 thereby energizing heat pump 18. The energization of furnace relay 80 results in the closure of normally open switch 86 thereby energizing furnace 14. As discussed previously, the various components thus described operate in combination to coordinately control the heat pump and furnace when relatively warm air is required in the enclosure.

Operation of the system heretofore described will now be described in detail during a typical heating cycle. Four-way valve 28 is normally positioned such that heat pump 18 operates in its heating mode. As the temperature of the air in enclosure 12 decreases below a first threshold setting as established by first heating stage 48 of thermostat 46, the first heating stage switch will close. Assuming the ambient temperature is above a predetermined level, so thermostat 72 is in its first operating position 73, the closure of the first heating stage 48 of the thermostat results in the energization of heat pump relay 76 through conductors 74 and 78, and normally closed switch 72. Energization of relay 76 activates compressor 20 and motor 37 to provide relatively warm air to the enclosure through operation of heat pump 18. The closure of first heating stage 48 of the thermostat also results in the energization of furnace fan motor 35 through energization of blower relay 58 via conductor 60.

If the temperature of the air in the enclosure should continue to decrease even though heat pump 18 is activated, second heating stage 50 of thermostat 46 will close when the indoor temperature decreases below a second threshold setting. The closure of the second heating stage of the thermostat results in the energization of control relay 64 thereby closing normally open switches 62 and 66 and opening normally closed switch 69. The closure of switch 62 results in the energization of furnace relay 80, thereby closing normally open switch 86 to energize furnace 14. With furnace 14 energized, the fuel (if furnace 14 is a fossil fuel fired furnace) will be supplied to the furnace through conventional valves and ignited to provide heat to coil 16 which subsequently warms the air routed thereover by fan 34.

Closure of switch 66 results in the establishment of a holding circuit via conductor 70 for a reason to be more fully explained hereinafter. The opening of switch 69 deenergizes heat pump relay 76, to open switch 84 to prevent simultaneous operation of the heat pump and furnace. Since first heating stage 48 remains closed, blower relay 58 remains energized to continue operation of blower 34.

As furnace 14 provides relatively warm air to enclosure 12, the temperature of the air therein will increase. Initially the temperature of the air will rise above the second threshold setting of thermostat 46, to open second heating stage 50. However, the opening of second heating stage 50 does not deenergize relay 64; the relay will remain energized through the holding circuit previously established via closed switch 66 and conductor 70. With relay 64 remaining energized, furnace relay 80 will likewise remain energized and heat pump relay 76 deenergized. Thus, once furnace 14 has been activated due to closure of second heating stage 50 of thermostat 46, the furnace will continue to operate to increase the temperature of the air in the enclosure to above the first threshold setting of first heating stage 48. The heat pump is maintained inactive as the temperature of the air in the enclosure increases from below the second threshold setting to above the first threshold setting. Once first heating stage 48 is satisfied and the switch opens, relay 64 is deenergized to place switches 62, 66 and 69 in their normal positions. Thus when the temperature of the air in the enclosure again decreases below the first threshold setting, the heat pump will again be energized. By reducing the number of times the heat pump is cycled in the manner described herein, as compared to that described in United States Patent 3,996,998, a more efficient heating system is provided, as it has been determined the coefficient of performance of a heat pump is reduced if the heat pump is rapidly cycled on and off.

If the ambient should fall below a predetermined level as established by the setting of outdoor thermostat 72, the thermostat will assume its second operating position 75, represented by dotted lines. With thermostat 72 in its dotted line position, only furnace relay 80 will be energized when either the first or second stages of the heating portion of indoor thermostat 46 are closed. Switch 69 will move to its second operating position when the ambient temperature decreases to a level whereat it is undesirable to operate the heat pump from an efficiency standpoint or from economic considerations due to the ambient temperature falling below the "break even" temperature.

When system 10 is operating to provide relatively cool air to the enclosure, the cooling portion of indoor thermostat 46 is activated. Initially first stage 52 of the cooling portion is energized to place four-way reversing valve 28 in its cooling mode position. Subsequently, second stage 54 of the cooling portion of thermostat 46 will energize blower relay 58 and heat pump relay 76 to provide relatively cold air to the enclosure as required.

The present invention provides an air conditioning system operable to either deliver relatively warm or relatively cool conditioned air to an enclosure in accordance with the temperature requirements therein. The system, when operating in a heating mode, coordinately controls the operation of a furnace and a heat pump to provide a system that is efficient and effective to deliver the warm air at a most reasonable cost.

CLAIMS:

1. A system for conditioning the air in an enclosure including furnace means for delivering relatively warm conditioned air to said enclosure; heat pump means for selectively delivering relatively warm or relatively cool conditioned air to said enclosure, and including an indoor coil, an outdoor coil, and compressor means; indoor thermostatic means having first and second threshold temperature settings for sensing the temperature of the air in the enclosure

characterized by.

control means (62, 64, 69, 66, 76, 80, 84, 86) for coordinating the operation of said heat pump means (18) and said furnace means (14) in response to the air temperature sensed by said indoor thermostatic means (46), said control means being operable in a first stage (48) whenever said first threshold temperature setting exceeds said indoor temperature and in a second stage (50) whenever said second threshold temperature exceeds said indoor temperature, said control means (76, 84) solely activating said heat pump means (18) in said first stage to deliver relatively warm air to said enclosure, and solely activating (62, 64, 66, 69, 80, 86) said furnace means (14) in said second stage to deliver relatively warm air to said enclosure, said control means (64, 66, 69) in said second stage maintaining said furnace means (14) active and said heat pump means (18) inactive until said indoor temperature exceeds said first threshold (48) temperature.

2. A system in accordance with claim 1 characterized further by including outdoor thermostatic means (72) to sense the temperature of said ambient and to render said heat pump means (18) inoperable irrespective of the sensed temperature of the air in the enclosure when the temperature of said ambient decreases below a predetermined threshold setting, said control means (75, 80) solely activating said furnace means in said first and second states.

3. A system in accordance with claim 2, characterized in that said outdoor thermostatic means (72) is manually adjustable for permitting the changing of said predetermined threshold setting thereof.

4. A system in accordance with claims 1 or 3, characterized in that said control means includes first relay means (64); and a holding circuit (62, 66, 69) activated by said relay means (64) to maintain said furnace means (14) active and said heat pump means (18) inactive as the temperature of the air in the enclosure increases from below said second threshold setting to above said first threshold setting.

5. A method of conditioning the air in an enclosure characterized by the steps of activating (46, 76, 84) a heat pump (18) to supply relatively warm air to the enclosure when the air temperature therein decreases below a first predetermined level; activating (50, 64, 80, 86) a furnace (14) while deactivating (69) the heat pump (18) to supply relatively warm air to the enclosure when the air temperature therein decreases below a second predetermined level; and maintaining (62, 66) the furnace (14) active and the heat pump (18) inactive until the temperature of the air in the enclosure has increased above said first predetermined level.

6. A method in accordance with claim 5 characterized further by including the steps of sensing (72) the temperature of the outdoor air; and only activating (75, 80, 86) the furnace when the temperature of the air in the enclosure decreases below the first predetermined level when the sensed outdoor air temperature decreases below a predetermined level.

7. A method in accordance with claim 6 characterized further by including the step of varying the predetermined level of the sensed outdoor air temperature.

INDOOR THERMOSTAT 12

46

31 31

4 WAY VALVE

28

OUTDOOR COIL 22

37

FURNACE HEAT EXCHANGE COIL 16

24

30

26

20 COMPRESSOR

18

36

34

35

OUTDOOR THERMOSTAT 72

32

14

10

CONTROLLER

19

_FIG. 1_

FIG. 2

# EUROPEAN SEARCH REPORT

**European Patent Office**

Application number: **EP 79 10 2312**

## DOCUMENTS CONSIDERED TO BE RELEVANT

| Category | Citation of document with indication, where appropriate, of relevant passages | Relevant to claim |
|---|---|---|
| D | <u>US - A - 3 996 998</u> (M. GARST et al.)<br><br>* Column 1, lines 18-46; column 2, line 22 - column 3, line 8; column 3, line 36 - column 4, line 5; column 4, line 13 - column 5, line 11; column 6, lines 14-25; figures 1,2 *<br><br>-- | 1,2,5,6 |
| | <u>US - A - 3 993 121</u> (G. MEDLIN)<br><br>* Column 3, line 28 - column 4, line 17; column 4, line 65 - column 5, line 27; figures 1,2 *<br><br>-- | 1,5 |
| | ESCHER WYSS MITTEILUNGEN, vol. 19/20, 1946/1947<br>Zürich, Zw.<br>R. RUEGG: "Das wirtschaftliche Optimum der Leistungsgrösse von Wärmepumpen", pages 76-85<br><br>* Page 76, left-hand column, lines 1-38; page 80, right-hand column, lines 26-49 *<br><br>-- | 2,6 |
| P | <u>US - A - 4 143 707</u> (C. LEWIS et al.)<br><br>* Column 6, line 15 - column 7, line 55; figures 1,2 *<br><br>-- | 1,2,5,6 |
| P | <u>US - A - 4 102 390</u> (J. HARNISH et al.)<br><br>* Column 1, lines 45-63; column 4, line 40 - column 5, line 34; figures 1,2 *<br>-- ./. | 1,5 |

**CLASSIFICATION OF THE APPLICATION (Int. Cl. 3)**

F 24 D 12/00
F 24 F 11/08
G 05 D 23/19

**TECHNICAL FIELDS SEARCHED (Int.Cl. 3)**

F 25 B 13/00
        29/00
F 24 D 12/00
        11/02
F 24 F 11/08
F 24 D 19/10
F 24 J 3/04
G 05 D 23/19

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-10-1979 | HELOT |

EPO Form 1503.1  06.78

European Patent
Office

**EUROPEAN SEARCH REPORT**

| | **DOCUMENTS CONSIDERED TO BE RELEVANT** | | | CLASSIFICATION OF THE APPLICATION (Int. Cl. 3) |
|---|---|---|---|---|
| Category | Citation of document with indication, where appropriate, of relevant passages | | Relevant to claim | |
| P,E | GB - A - 2 008 240 (CARRIER CORP.) <br> * Page 1, lines 52-65; 91-105; page 4, lines 99-106; page 5, claim 1; figures 1,2 * <br><br> & DE - A - 2 848 848 <br><br> & FR - A - 2 408 798 <br><br> & NL - A - 78 10472 <br><br> -- | | 1,2,5, 6 | |
| A | US - A - 3 556 203 (W. KYLE) <br> * Column 3, line 21 - column 4, line 23; figures 1,10 * <br><br> -- | | 1,5 | TECHNICAL FIELDS SEARCHED (Int. Cl. 3) |
| A | US - A - 3 537 509 (D. FERDELMAN) <br> * Column 2, lines 10-75; figure 1 * <br><br> ---- | | 1,5 | |

EPO Form 1503.2  06.78